# EUROPÄISCHE PATENTSCHRIFT

(11) **EP 1 004 748 B1**
(45) Veröffentlichungstag und Bekanntmachung des Hinweises auf die Patenterteilung: **02.11.2011**
(21) Anmeldenummer: 99121823.1
(22) Anmeldetag: 04.11.1999
(51) Int. Cl.: F01D 5/08, F01D 1/32

(54) **Laufrad für eine Strömungsmaschine**
Runner for a turbomachine
Roue mobile pour une turbomachine

(30) Priorität: 27.11.1998 DE 19854908
(43) Veröffentlichungstag der Anmeldung: 31.05.2000
(73) Patentinhaber: Rolls-Royce Deutschland Ltd & Co KG, 15827 Dahlewitz (DE)
(72) Erfinder: Negulescu, Dimitrie, Dr., 14163 Berlin (DE); Lötzerich, Michael, Dr., 79793 Horheim (DE)

(56) Entgegenhaltungen:
- EP-A- 0 859 128
- FR-A- 1 207 772
- US-A- 3 873 234
- US-A- 4 820 116
- US-A- 4 910 958
- US-A- 5 440 874

## Beschreibung

Die Erfindung betrifft ein Laufrad mit Schaufeln einer Strömungsmaschine, Insbesondere einer Axial-Hochdruckturbine, mit zumindest einem integrierten Kühlluftkanal, der an der bezüglich der Strömungsrichtung des von der Schaufel geführten Arbeitsgases stromabwärtigen Rückseite des Schaufelfußes mündet. Zum technischen Umfeld wird neben der GB 2 057 573 A auf die DE 32 10 626 C2 sowie die EP0859128 verwiesen.

Eine solche Schaufel kann bspw. in der Hochdruck-Turbine einer Flug-Gasturbine zum Einsatz kommen. Nun benötigt ein optimal ausgelegtes Kühlsystem eines Hochleistungs-Flugtriebwerkes für jede der üblicherweise mehrfach vorhandenen Turbinenstufen, insbesondere Hochdruck-Turbinenstufen, einen optimierten, d.h. minimierten Kühlluftdurchsatz mit entsprechend angepaßter Eintrittstemperatur und Förderdruck. So erhält zum Beispiel die erste Hochdruck-Turbinenstufe ihre Kühlluft von der letzten Verdichterstufe des der Hochdruckturbine im Flugtriebwerk vorgeschalteten mehrstufigen Verdichters, während die zweite Hochdruck-Turbinenstufe ihre Kühlluft von einer der letzten Verdichterstufen und die eventuelle dritte Turbinenstufe ihre Kühlluft von einer der mittleren Verdichterstufen erhält. Ein in dieser Art entwickeltes Triebwerks-Kühlsystem benötigt ein komplexes Kühlluft-Leitungsnetz, welches am Verdichter- und Turbinengehäuse angeflanscht ist. Eine solche Konstruktion ist aber schwer und störanfällig.

Grundsätzlich kann für die Kühlung der Turbinenstufen, insbesondere Hochdruck-Turbinenstufen, d.h. für die Kühlung der zugehörigen Schaufeln und Laufscheiben auch der sog. interne Kühlluftstrom der Strömungsmaschine bzw. Gasturbine oder des Flugtriebwerkes verwendet werden, der üblicherweise nur von einer einzigen Kühlluft-Förderquelle, nämlich von der letzten Verdichterstufe gefördert wird, jedoch besitzt dieser Kühlluftstrom insbesondere für die hinterste Hochdruck-Turbinenstufe der mehrstufigen Hochdruckturbine kein ausreichendes Kühlpotential mehr, da dieser Kühlluftstrom selbstverständlich entlang der vorhergehenden Kühlluftkanäle aufgeheizt wird. Diese vorhergehenden Kühlluftkanäle verlaufen dabei in der Regel durch die Turbinen-Laufscheibe bzw. durch die Schaufelfüße der auf der Laufscheibe angeordneten Schaufeln, so wie dies insbesondere in der eingangs erstgenannten GB 2 057 573 A gezeigt ist.

Eine Abhilfemaßnahme für diese geschilderte Problematik aufzuzeigen, ist Aufgabe der vorliegenden Erfindung.

Die Lösung dieser Aufgabe ist **dadurch gekennzeichnet, daß** der Kühlluftkanal, der auf der Rückseite des Schaufelfußes mündet, von einer im Schaufelfuß vorgesehenen Kühlluftkammer abzweigt, von welcher aus zumindest ein an der das Arbeitsgas führenden Oberfläche der Schaufel mündender Kühlkanal mit Kühlluft versorgt wird, und daß der an der Rückseite des Schaufelfußes mündende Kühlluftkanal in einem stetigen Verlauf zu seiner Austrittsöffnunug hin gekrümmt und konvergierend ausgebildet ist. Dabei ist die Austrittöffnung des Kühlluftkanals in eine der Rotationsrichtung der Laufscheibe entgegengesetzten Richtung ausgerichtet.

Vorteilhafte Aus- und Weiterbildungen sind Inhalt der Unteransprüche, insbesondere ist hierin auch eine Laufscheibe einer Strömungsmaschine mit mehreren erfindungsgemäßen Schaufeln angegeben.

Näher erläutert wird die Erfindung anhand dreier bevorzugter Ausführungsbeispiele, wobei sämtliche näher beschriebenen Merkmale erfindungswesentlich sein können. Im einzelnen zeigt
- Fig.1a: einen Teil-Längsschnitt durch eine zweistufige Hochdruck- Turbine, deren Stufe-I-Laufscheibe mit erfindungsgemäßen Schaufeln nach einem ersten Ausführungsbeispiel ausgestattet ist,
- Fig.1b: den Schnitt A-A aus Fig.1a,
- Fig.1c: eine perspektivische Teilansicht der die Schaufeln auf der Laufscheibe sichernden Schließplatte,
- Fig.2a: eine der Fig.1a entsprechende Darstellung mit Schaufeln, die entsprechend einem zweiten Ausführungsbeispiel gestaltet sind,
- Fig.2b: den Schnitt B-B aus Fig.2a,
- Fig.3a: eine der Fig.1a entsprechende Darstellung mit Schaufeln, die entsprechend einem dritten Ausführungsbeispiel gestaltet sind,
- Fig.3b: den Schnitt C-C aus Fig.3a, sowie
- Fig.3c: eine Perspektivdarstellung dieses gemäß Fig.3a, Fig.3b turbi- nenartig gestalteten, im Schaufelfuß verlaufenden Kühlluftka- nales.

In sämtlichen Figurendarstellungen ist mit der Bezugsziffer 8 die Laufscheibe der ersten Stufe einer Hochdruck-Axialturbine eines Flugtriebwerkes bezeichnet, welcher eine sog. Stufe-II-Laufscheibe 8' nachgeordnet ist. Die Stufe-I-Laufscheibe 8 und die Stufe-II-Laufscheibe 8' tragen wie üblich über ihrem Umfang verteilt eine Vielzahl von Turbinen-Schaufeln 2 bzw. 2' (im folgenden auch nur Schaufeln 2, 2' genannt), die in einen das Arbeitsgas der Strömungsmaschine gemäß Pfeilrichtung 10 führenden Ringkanal 11 hineinragen, und in welchem zwischen den Stufe-I-Schaufeln 2 und den Stufe-II-Schaufeln 2' wie üblich eine Vielzahl von letztlich am Gehäuse 13 der Axialturbine befestigten Leitschaufeln 12 hineinragen. Ferner ist mit der Bezugsziffer 14 die Rotationsachse der Axialturbine bezeichnet, um welche die miteinander auf hier nicht dargestellte Weise verbundenen Laufscheiben 8, 8' rotieren.

In üblicher Weise sind auch hier die Schaufeln 2 bzw. 2' auf den zugehörigen Laufscheiben 8 bzw. 8' befestigt. Die Schaufeln 2, 2' weisen (in Strömungsrichtung 10 betrachtet) tannenbaumförmig geformte Schaufelfüße 1 bzw. 1' auf, mit denen die Schaufeln 2, 2' in entsprechend gestaltete Aussparungen in den Scheiben 8, 8' eingesetzt sind. Gegen axiale Verschiebung (in Pfeilrichtung 10) gesichert sind die Schaufeln 2, 2' dabei durch geeignet gestaltete und an den Laufscheiben 8, 8' befestigte Schließplatten 3 bzw. 3'.

Wegen der hohen Temperaturbelastung durch das im Ringkanal 11 strömende Arbeitsgas sind die Schaufeln 2, 2' luftgekühlt, d.h. in den Schaufeln 2, 2' verläuft zumindest ein hier nicht dargestellter Kühlkanal, der über eine Vielzahl sog. Effusionslöchern auf der das Arbeitsgas führenden bzw. von diesem beaufschlagten Oberfläche der Schaufeln 2, 2' mündet. Mit Kühlluft versorgt wird dieser nicht dargestellte Kühlkanal von einer im Schaufelfuß vorgesehenen (und dabei lediglich für den Schaufelfuß 1 dargestellten) Kühlluftkammer 7 aus, d.h. von dieser Kühlluftkammer 7 zweigt der zumindest eine genannte Kühlkanal ab.

Mit Kühlluft versorgt wird diese Kühlluftkammer 7 über einen in der Laufscheibe 8 verlaufenden Versorgungskanal 15, der ausgehend von der bezogen auf die Strömungsrichtung 10 vorderen Stirnseite 8a der Laufscheibe 8 in der den Schaufelfuß 1 aufnehmenden nicht näher bezeichneten Aussparung der Laufscheibe 8 mündet. Demzufolge begrenzt die in Radialrichtung 16 innenliegende und die besagte Aussparung begrenzende Wand 8b der Laufscheibe 8 in Radialrichtung 16 nach innen hin die ansonsten vom Schaufelfuß 1 begrenzte, aus diesem herausgearbeitete Kühlluftkammer 7. An die Eintrittsöffnung des Versorgungskanales 15 auf der Stirnseite 8a wird auf nicht dargestellte Weise ein vom dieser Hochdruck-Axialturbine vorgeschalteten Verdichter geförderter Kühlluftstrom herangeführt, bei welchem es sich um den eingangs sog. internen Kühlluftstrom handelt. Dieser Kühlluftstrom, von welchem ein Teil auf die im folgenden beschriebene Weise in Strömungsrichtung 10 durch den Schaufelfuß 1 hindurchgeführt wird, ist mittels nicht mit Bezugsziffern versehenen Pfeilen dargestellt.

Von der Kühlluftkammer 7 zweigt nicht nur der zumindest eine nicht dargestellte und letztendlich über die weiter oben genannten Effusionslöcher auf der Oberfläche der Schaufel 2 im Ringkanal 11 mündende Kühlkanal ab, sondern zusätzlich ein weiterer Kühlluftkanal 4, der vollständig im Schaufelfuß 1 verläuft und dabei - ohne den in den Ringkanal 11 hineinragenden Teil der Schaufel 2 zu tangieren, in Strömungsrichtung 10 betrachtet auf der Rückseite 1a des Schaufelfußes 1 mündet. Durch diesen Kühlluftkanal 4 kann somit ein Teil des Kühlluftstromes, der zur an der Stirnseite 8a der Laufscheibe 8 liegenden Eintrittsöffnung des Versorgungskanales 15 herangeführt wird, in den Raum 6 zwischen den beiden Laufscheiben 8 und 8' gelangen, von wo aus er auf hier figürlich nicht dargestellte Weise (ähnlich wie bei der Stufe-I-Laufscheibe 8) den Schaufeln 2' der Stufe-II-Laufscheibe 8' zugeführt bzw. in diese hineingeführt wird.

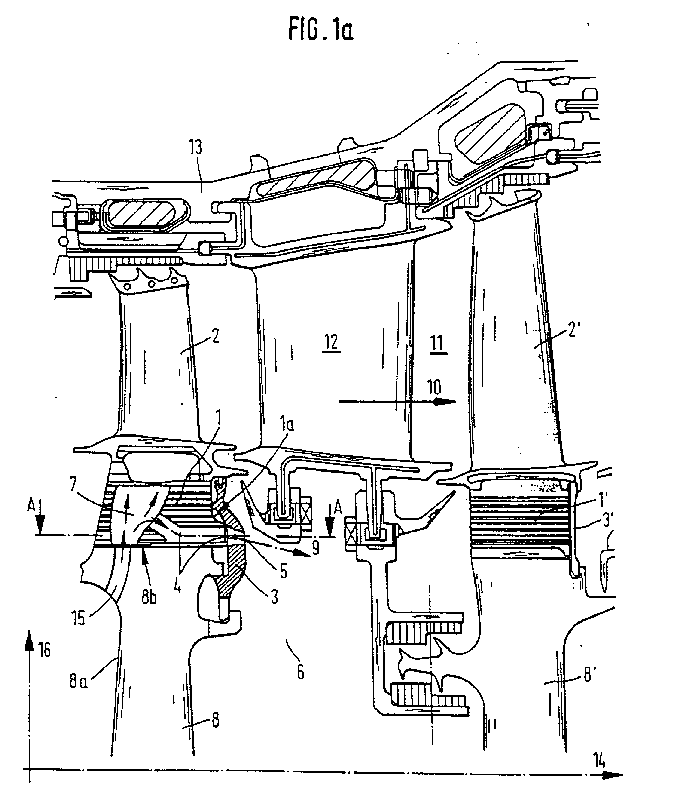

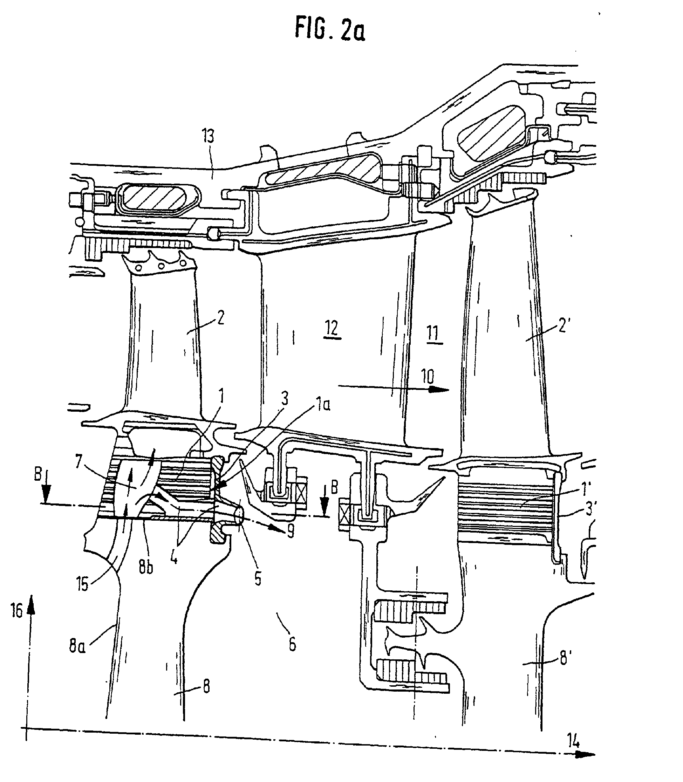

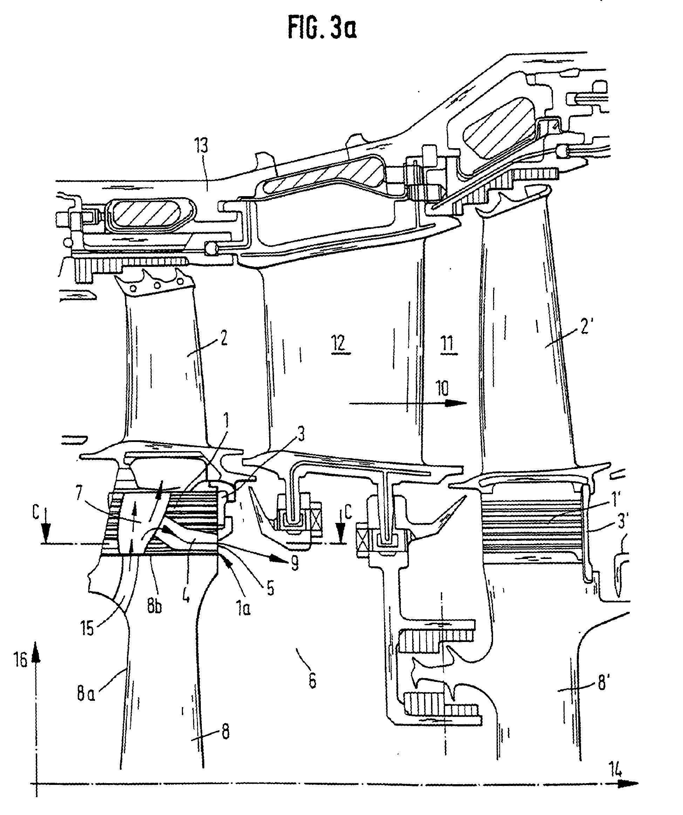

Beim Ausführungsbeispiel nach **Fig.3a** mündet der im Schaufelfuß 1 verlaufende Kühlluftkanal 4 direkt in den Raum 6, d.h. die Austrittsöffnung 5 dieses Kühlluftkanales 4 liegt in der Rückseite 1a des Schaufelfußes 1. Bei den beiden Ausführungsbeispielen der **Figuren 1a** **und** **2a** setzt sich der Kühlluftkanal 4 anschließend an die Rückseite 1a des Schaufelfußes 1 in der bereits genannten Schließplatte 3 fort und mündet an deren dem Schaufelfuß 1 abgewandten Rückseite über eine Austrittsöffnung 5 im Raum 6.

Wie ersichtlich, ist in sämtlichen Ausführungsbeispielen der Kühlluftkanal 4 von der Kühlluftkammer 7 zur Austrittsöffnung 5 hin im wesentlichen stetig verlaufend, dabei den darin geführten Kühlluftstrom umlenkend und bevorzugt konvergierend ausgebildet. Bereits aufgrund der Umlenkung des Kühlluftstromes sowie aufgrund ihres im wesentlichen stetigen Verlaufes bilden die in jeder Schaufel 1 der Laufscheibe 8 vorgesehenen Kühlluftkanäle 4 aufgrund ihrer nicht unerheblichen Länge im Schaufelfuß 1 in Verbindung mit der Tatsache, daß die Schaufel(n) 1 bzw. die Laufscheibe 8 um die Rotationsachse 14 rotiert, eine sog. Mikro-Axialturbine. Diese Eigenschaft hat zur Folge, daß sich der in diesen Kühlluftkanälen 4 geführte Kühlluftstrom auf seinem Weg von der Kühlluftkammer 7 zur Austrittsöffnung 5 hin abkühlt. Dies ist der wesentliche und gewünschte Effekt der in der beschriebenen Weise gestalteten Kühlluftkanäle 4. Diese Abkühlung des durch die Schaufelfüße 1 der Stufe-I-Laufscheibe 8 hindurchgeführten Teiles des an die Laufscheibe 8 herangeführten Kühlluftstromes ist insofern vorteilhaft, als der danach in den Raum 6 gelangende und für die Kühlung der Stufe-II-Laufscheibe 8' vorgesehene Kühlluftstrom kälter ist, als er ohne eine derartige Gestaltung der Kühlluftkanäle in den auf der Stufe-I-Laufscheibe 8 vorgesehenen Stufe-I-Schaufeln 2 wäre.

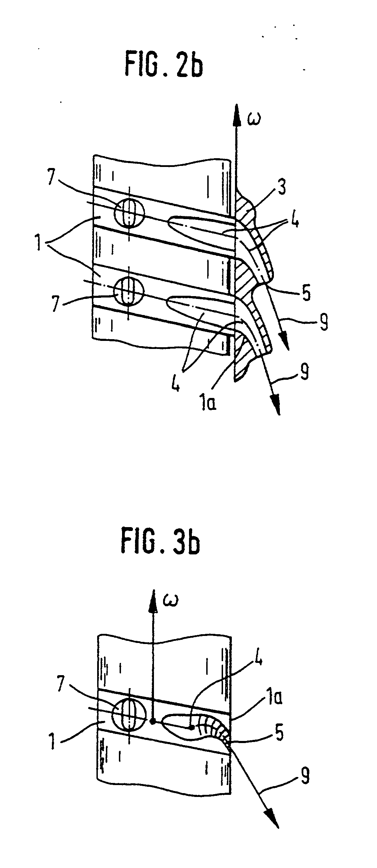

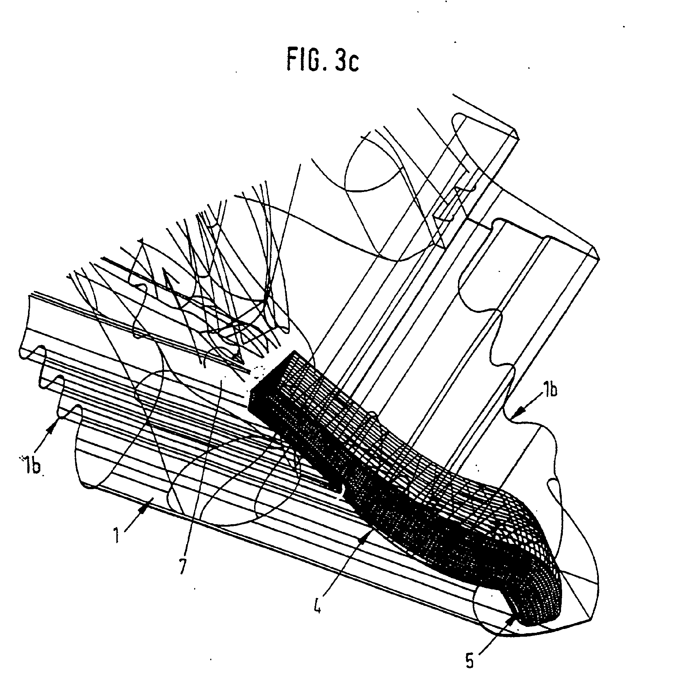

Weiter gesteigert werden kann dieser soeben beschriebene Effekt, wenn jeder Kühlluftkanal 4 von der Kühlluftkammer 7 zur Austrittsöffnung 5 hin konvergierend ausgebildet ist, da der im Kühlluftkanal 4 geführte Kühlluftstrom hierdurch beschleunigt wird, was eine verstärkte Abkühlung zur Folge hat. Der engste Querschnitt des Kühlluftkanales 4 liegt somit wie bei den Strömungskanälen in den sog. Reaktionsturbinen im Bereich der Austrittsöffnung 5. Bevorzugt ist somit der Kühlluftkanal 4 nach den Auslegungsregeln für axiale Reaktionsturbinen gestaltet, so daß tatsächlich eine realistische Mikro-Axialturbine vorliegt. Dabei zeigt **Fig.3c** eine Perspektivdarstellung des bzw. eines deratig ausgelegten, im Schaufelfuß 1 verlaufenden Kühlluftkanales 4, insbesondere desjenigen, der in den **Figuren 3a****,** **3b** dargestellt ist. In dieser **Figur 3c** erkennt man neben diesem Kühlluftkanal 4 deutlich die Kühlluftkammer 7 sowie linksseitig und rechtsseitig die Konturen 1b des tannenbaumförmigen Schaufelfußes 1.

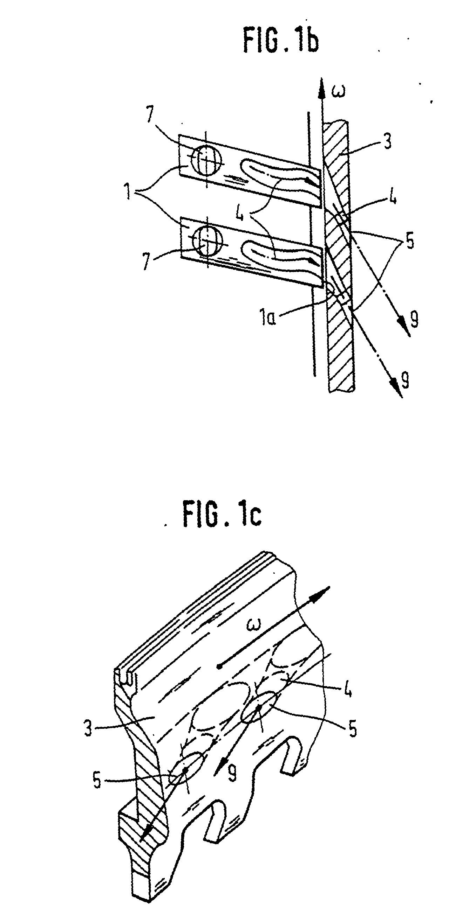

Bevorzugt ist die Austrittsöffnung 5 des Kühlluftkanales 4 derart gestaltet, daß der über diese Austrittsöffnung 5 austretende Kühlluftstrom eine der Rotationsrichtung der Schaufeln 2 in der Strömungsmaschine bzw. Hochdruck-Axialturbine entgegengerichtete Geschwindigkeitskomponente besitzt. Dies gilt sowohl für das Ausführungsbeispiel nach **Fig.3a**, als auch für diejenigen nach den **Figuren 1a****,** **2a**, bei denen die Austrittsöffnung 5 des Kühlluftkanales 4 aus der Schließplatte 3 derart gestaltet ist, daß der austretende Kühlluftstrom eine der Rotationsrichtung der Laufscheibe 8 entgegengerichtete Geschwindigkeitskomponente besitzt. Diese Gestaltung der Austrittsöffnung 5 geht in den einzelnen Ausführungsbeispielen dabei aus den **Figuren 1b, 1c****,** **2b 3b** **und** **3c** hervor, wobei die Austrittsrichtung des Kühlluftstromes durch die Pfeile 9 und die Rotationsrichtung der Laufscheibe 8 durch den mit dem Buchstaben ω bezeichneten Pfeil wiedergegeben ist. Durch diese Maßnahme wird der Kühlluftstrom, der den Schaufelfuß 1 in Richtung des Raumes 6 verläßt, in die umgekehrte Laufscheiben-Drehrichtung ω umgelenkt, wodurch nicht nur der Kühlluftstrom zusätzliche Arbeit an der Laufscheibe 8 verrichtet, sondern auch der Austrittsdrall des Kühlluftstromes aus dem Schaufelfuß 1 verringert wird.

Zusammenfassend sei angegeben, daß in einem Anwendungsfall aufgrund der strömungsdynamischen Optimierung des stetig und konvergierend verlaufenden Strömungskanales 4 und der damit verbundenen Umlenkung des Kühlluftstromes dieser um ca. 100° im Absolutsystem abgekühlt wird. So wird durch optimale und natürliche Umlenkung und Entspannung des Kühlluftstromes in den sog. Mikro-Axialturbinen-Kühlluftkanälen 4 durch eine einfache Konstruktion ohne zusätzliche Bauteile eine ausgezeichnete Kühleffektivität für die der Laufscheibe 8 nachfolgende Laufscheibe 8' bzw. für weitere Stufen der Hochdruck-Axialturbine erreicht. Dabei sei darauf hingewiesen, daß die beschriebene Gestaltung der Schaufel 2 bzw. der Laufscheibe 8 nicht auf eine Hochdruck-Axialturbine beschränkt ist, sondern selbstverständlich generell an Strömungsmaschinen eingesetzt werden kann.

Zurückkommend auf das Ausführungsbeispiel nach **Fig. 2a****,** **2b** erkennt man, daß die Schließplatte 3 im Bereich des konvergierenden Kühlluftkanales 4 derart breit ausgebildet ist, daß der in dieser Schließplatte 3 verlaufende Teil des Kühlluftkanales 4 eine ausreichende Länge aufweist, um den Kühlluftstrom umlenken zu können. Dabei befindet sich der konvergierende Abschnitt des Kühlluftkanales 4 im wesentlichen in der Schließplatte 3, während derjenige Teil des Kühlluftkanales 4, der im Schaufelfuß 1 selbst verläuft, weniger konvergierend ausgebildet ist, jedoch kann dies sowie eine Vielzahl weiterer Details insbesondere konstruktiver Art durchaus abweichend von den gezeigten Ausführungsbeispielen gestaltet sein, ohne den Inhalt der Patentansprüche zu verlassen.

### Bezugszeichenliste:

- 1,1': Schaufelfuß der Schaufel 2 bzw. 2'
- 1a: Rückseite von 1 (in Strömungsrichtung 10 betrachtet)
- 1b: Konturen des tannenbaumförmigen Schaufelfußes (in **Fig.3c**)
- 2, 2': Schaufel (der Stufe I bzw. der Stufe II der Hochdruck-Axialturbine)
- 3, 3': Schließplatte der Laufscheibe 8 bzw. 8'
- 4: Kühlluftkanal
- 5: Austrittsöffnung von 4
- 6: Raum zwischen 8 und 8'
- 7: Kühlluftkammer (in 1)
- 8, 8': Laufscheibe (der Stufe I bzw. der Stufe II der Hochdruck-Axialturbine)
- 8a: vordere Stirnseite von 8
- 8b: radial innenliegende Wand von 8 im Bereich der Aussparung für 1
- 9: Pfeil: Austrittsrichtung des in 4 geführten Kühlluftstromes
- 10: Strömungsrichtung des Arbeitsgases in 11
- 11: Ringkanal für das Arbeitsgas
- 12: Leitschaufel
- 13: Gehäuse der Hochdruck-Axialturbine
- 14: Rotationsachse
- 15: Versorgungskanal
- 16: Radialrichtung
- ω: Rotationsrichtung von 8

## Patentansprüche

1. Laufrad für eine Strömungsmaschine, insbesondere Hochdruck-Axialturbine, das Schaufeln (2) mit am Umfang einer Laufscheibe (8) eingesetzten Schaufelfüßen (1) umfasst, wobei der jeweilige Schaufelfuß (1) eine über die Laufscheibe (8) mit Kühlluft versorgte Kühlluftkammer (7) aufweist, von der mindestens ein Kühlkanal zu der das Arbeitsgas führenden Oberfläche der Schaufel (2) und ein weiterer Kühlluftkanal (4) zur stromabwärtigen Rückseite des Schaufelfußes (1) führt, **dadurch gekennzeichnet, dass** der weitere Kühlluftkanal (4) in einem stetigen Verlauf zu seiner Austrittsöffnung (5) hin gekrümmt (umgelenkt) und konvergierend ausgebildet ist und die Austrittsöffnung (5) in einer der Rotationsrichtung (w) der Laufscheibe (8) entgegengesetzten Richtung (9) ausgerichtet ist

2. Laufrad nach Anspruch 1, **dadurch gekennzeichnet, dass** sich die Kühlluftkanäle (4) in Austrittsöffnungen (5) einer an der Rückseite der Laufscheibe (8) befestigten Schließplatte (3) fortsetzen.

3. Laufrad nach Anspruch 2, **dadurch gekennzeichnet, dass** die sich in der Schließplatte (3) fortsetzenden Kühlkanäle (4) in einem weitergeführten stetigen Verlauf gekrümmt und konvergierend und mit zur Rotationsrichtung (ω) in entgegengesetzter Richtung (9) angeordneter Austrittsöffnung (5) ausgebildet sind.

## Claims

1. Rotor wheel for a fluid-flow machine, more particularly a high-pressure axial-flow turbine, including blades (2) with blade roots (1) inserted on the circumference of a rotor disk (8), with the respective blade root (1) featuring a cooling-air chamber (7) supplied with cooling air via the rotor disk (8), with at least one cooling duct leading from said cooling-air chamber (7) to the working gas-wetted surface of the blade (2) and another cooling-air duct (4) to the downstream rear side of the blade root (1), **characterized in that** the other cooling-air duct (4) takes a curved (deflected) and converging shape in a continuous passage towards its outlet opening (5), and that the outlet opening (5) is oriented in a direction (9) opposite to the direction of rotation (ω) of the rotor disk (8).

2. Rotor wheel in accordance with Claim 1, **characterized in that** the cooling-air ducts (4) extend into outlet openings (5) of a locking plate (3) attached to the rear side of the rotor disk (8).

3. Rotor wheel in accordance with Claim 2, **characterized in that** the cooling-air ducts (4) extending into the locking plate (3) take a curved and converging shape in a continuous passage, with the outlet opening (5) oriented in a direction (9) opposite to the direction of rotation (ω).

## Revendications

1. Roue de rotor destinée à une machine à écoulement, en particulier à une turbine axiale haute pression, laquelle comprend des aubes (2) avec des pieds d'aube (1) insérés sur le pourtour d'un disque de rotor (8), sachant que le pied d'aube (1) respectif présente une chambre d'air de refroidissement (7) alimentée en air de refroidissement par le disque de rotor (8) et de laquelle sortent au moins un canal de refroidissement menant à la surface de l'aube (2) guidant le gaz moteur, et un canal d'air de refroidissement supplémentaire (4) menant à la face arrière aval du pied d'aube (1), **caractérisée en ce que** le canal d'air de refroidissement supplémentaire (4) est formé selon un tracé continu vers son orifice de sortie (5) de manière coudée (déviée) et convergente, et que l'orifice de sortie (5) est orienté dans un sens (9) opposé au sens de rotation (ω) du disque de rotor (8).

2. Roue de rotor selon la revendication n° 1, **caractérisée en ce que** les canaux d'air de refroidissement (4) se prolongent dans des orifices de sortie (5) d'une plaque de fermeture (3) fixée sur la face arrière du disque de rotor (8).

3. Roue de rotor selon la revendication n° 2, **caractérisée en ce que** les canaux de refroidissement (4) se prolongeant dans la plaque de fermeture (3) sont formés selon un tracé continu de manière coudée et convergente et avec un orifice de sortie (5) disposé dans un sens (9) opposé au sens de rotation (ω).
